# DEMANDE DE BREVET EUROPEEN

(11) **EP 0 544 580 A1**
(43) Date de publication de la demande: **02.06.1993**
(21) Numéro de dépôt: 92403157.8
(22) Date de dépôt: 24.11.1992
(51) Int. Cl.: G09B 9/14, G09B 9/02, B64G 7/00

(54) **Centrifugeuse à moteurs hydrauliques, notamment pour l'entraînement de pilotes d'aéronefs**

(30) Priorité: 25.11.1991 FR 9114497
(71) Demandeur: SOCIETE INDUSTRIELLE D'AVIATION LATECOERE, F-31079 Toulouse Cédex (FR)
(72) Inventeur: Amalric, Bernard, F-31240 L'Union (FR)
(74) Mandataire: Obolensky, Michel

(57) **Abrégé**

Cette centrifugeuse comprend une nacelle montée à une extrémité d'un bras de support, lui-même monté à rotation sur un arbre central, tournant dans un socle, ledit arbre étant relié à un arbre de sortie à petite vitesse d'un réducteur ayant des arbres à grande vitesse entraînés par des moteurs hydrauliques (13a, 13b,13c...), convertibles en pompes, alimentés en fluide par une pompe (27), un accumulateur à haute pression (28a, 28b,28c ...) et un réservoir tampon (31a, 31b, 31c...), reliés au circuit d'alimentation de chaque moteur hydraulique convertible en pompe étant disposés de part et d'autre dudit moteur (13a,13b,13C...), les accumulateurs à haute pression étant destinés à absorber l'excédent d'énergie délivré par la pompe d'alimentation du moteur hydraulique, convertible en pompe, non consommé par le moteur lorsqu'il fonctionne en régime permanent et l'énergie que le moteur hudraulique converti en pompe délivre lorsqu'il fonctionne en régime de freinage et à fournir au moteur hydraulique l'énergie nécessaire à son fonctionnement en régime d'accélération brusque.

## Description

La présente invention concerne les centrifugeuses et se rapporte plus particulièrement aux centrifugeuses de recherche médicale et/ou d'entraînement de pilotes d'aéronefs.

Une centrifugeuse d'entraînement de pilotes comporte généralement une nacelle articulée à l'extrémité d'un bras tournant autour d'un axe vertical, porté par un arbre entraîné en rotation par l'arbre de sortie d'un réducteur ayant au moins un arbre d'entrée relié à au moins un moteur électrique.

De telles centrifugeuses nécessitent des pointes de puissance élevées.

On connaît des centrifugeuses d'entraînement du type entraîné par des moteurs électriques à courant continu, par exemple deux moteurs utilisés en ligne.

On connaît également d'autres variantes de motorisation avec moteurs à courant continu.

On peut par exemple citer plusieurs moteurs électriques à axe vertical sur autant d'arbres à grande vitesse d'un réducteur spécial.

On utilise également un ou plusieurs moteurs électriques à axe horizontal sur un ou plusieurs arbres à grande vitesse d'un réducteur spécial avec des renvois d'angle.

La motorisation électrique d'une centrifugeuse peut aussi être réalisée avec des moteurs électriques polyphasés.

On peut utiliser :
- un moteur unique conçu pour des vitesses faibles (0 à 80 tours/minute) accouplé directement sur l'extrémité de l'arbre du socle de la centrifugeuse ou avec un arbre monté sur des roulements capables de porter directement le bras de la centrifugeuse quand le stator du moteur est scellé au sol;
- un ou plusieurs moteurs polyphasés montés sur un réducteur comme dans le cas des moteurs à courant continu.

L'utilisation de moteurs électriques polyphasés nécessite la mise en oeuvre de moyens électriques de commande délicats pouvant être sujets à certaines faiblesses de fiabilité.

L'utilisation d'un très gros moteur unique sans interposition d'un réducteur pose de graves problèmes d'entretien.

Le courant haché du moteur unique en prise directe avec le bras peut induire des excitations de la nacelle à des fréquences indésirables.

Une machine notamment d'entraînement de pilotes d'aéronefs, doit être capable de communiquer aux différents points du corps du pilote des accélérations comprises dans une fourchette de valeurs la plus réduite possible.

Cette exigence implique pour la centrifugeuse un grand rayon de giration, en pratique aux environs de 6 à 10 mètres, vraisemblablement plus à l'avenir.

Une telle machine doit également être capable de reproduire les très brutales évolutions d'accélération reçues par le pilote sur les avions de combat les plus performants.

Le grand rayon de giration de la première exigence induit une inertie de la partie tournante d'autant plus grande qu'elle est associée à une exigence alourdissante de grande rigidité en flexion et en torsion (premier mode propre aux environs de 10 Hertz pour sauvegarder le confort du pilote sous les excitations diverses).

La deuxième exigence correspond à un gradient de vitesse de rotation élevé.

En fin de compte, le couple moteur, proportionnel à l'inertie et proportionnel au gradient de vitesse de rotation atteint des valeurs très élevées. Par voie de conséquence, si les puissances appelées sont de courte durée ( les vitesses de rotation maximales supportables par le pilote sont très rapidement réalisées), elles atteignent des valeurs très importantes. En l'absence d'un puisage sur une réserve d'énergie, les centrifugeuses répondant aux dernières exigences de performances nécessitent des puissances installées de un à plusieurs Mégawatts.

Les attributions de telles puissances par les réseaux électriques extérieurs peuvent être techniquement impossibles et en tout cas très coûteuses.

L'invention vise donc à créer une machine qui tout en faisant appel à une puissance installée relativement réduite soit capable de satisfaire aux exigences énoncées ci-dessus.

Elle a donc pour objet une centrifugeuse notamment d'entraînement de pilotes d'aéronefs comprenant une nacelle montée avec au moins un degré de liberté de déplacement à une extrémité d'un bras de support, lui-même monté à rotation sur un arbre central, tournant dans un socle, ledit arbre étant relié à un arbre de sortie à petite vitesse d'un réducteur ayant au moins un arbre à grande vitesse entraîné par au moins un moteur, caractérisé en ce que ledit au moins un moteur d'entraînement relié à l'arbre à grande vitesse du réducteur est un moteur hydraulique, convertible en pompe pour le freinage de la centrifugeuse, relié à une pompe d'alimentation en fluide, en ce qu'un accumulateur de fluide à haute pression et un réservoir tampon sont reliés au circuit d'alimentation du ou de chaque moteur hydraulique de part et d'autre dudit moteur, ledit accumulateur à haute pression étant destiné d'une part à absorber l'excédent d'énergie délivré par la pompe d'alimentation du moteur hydraulique non consommé par le moteur lorsqu'il fonctionne en régime permanent d'entraînement de la nacelle et l'énergie que le moteur hydraulique converti en pompe délivré lorsqu'il fonctionne en régime de freinage et d'autre part à fournir au moteur hydraulique l'énergie nécessaire à son fonctionnement en régime d'accélération brusque, et en ce que le ou chaque réservoir tampon constitue un collecteur du fluide délivré par l'accumulateur à haute pression lors de l'alimentation du moteur hydraulique en régime d'accélération brusque et une source de restitution de fluide à l'accumulateur à haute pression lors du fonctionnement du moteur hydraulique en pompe, en régime de freinage, et en ce qu'elle comporte en outre des moyens de commande asservie du fonctionnement en moteur ou en pompe du moteur hydraulique convertible en pompe.

L'invention sera mieux comprise à l'aide de la description qui va suivre, donnée uniquement à titre d'exemple et faite en se référant aux dessins annexés, sur lesquels :
- la Fig.1 est une vue schématique en élévation d'un exemple de centrifugeuse connue;
- la Fig.2 est une vue schématique en élévation d'une centrifugeuse suivant l'invention;
- la Fig.3 est une vue en élévation et en coupe dans un plan diamétral du réducteur de la centrifugeuse de la Fig.2;
- la Fig.4 est une schéma hydraulique simplifié de la centrifugeuse suivant l'invention; et
- les Fig.5a et 5b représentent en vue de dessus deux modes d'implantation des moteurs autour de l'arbre principal de la centrifugeuse suivant l'invention.

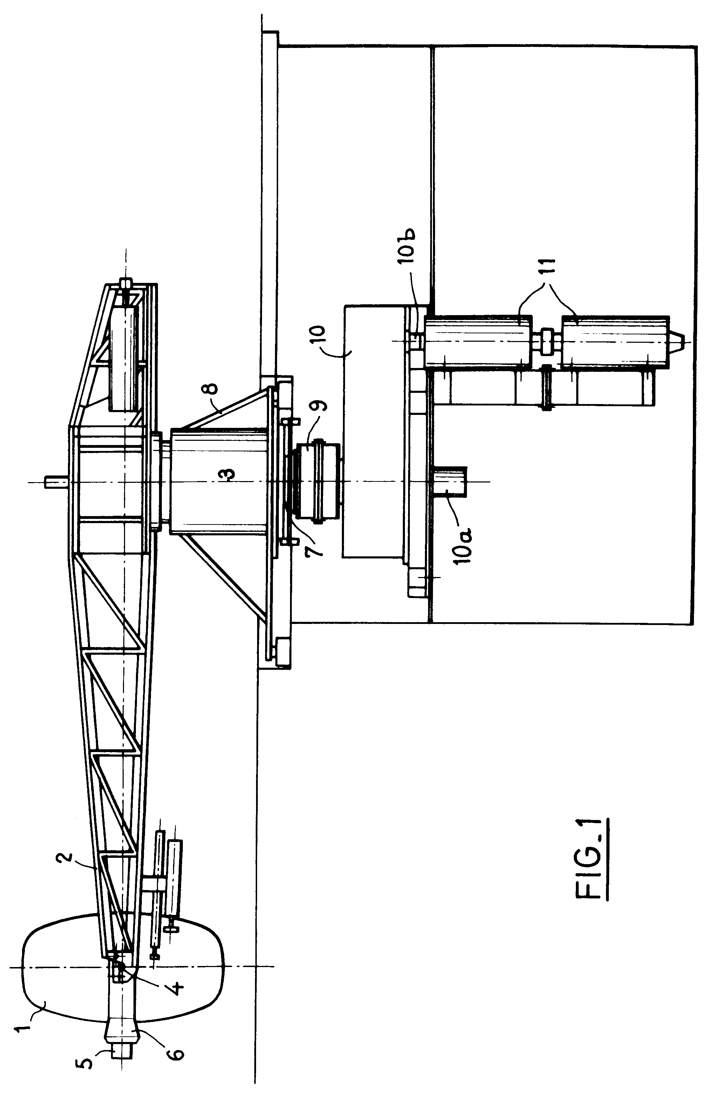

La centrifugeuse connue représentée à la Fig.1 comporte une nacelle 1 capable de porter un pilote en essai, articulée à l'extrémité de la fourche d'un bras 2 tournant autour d'un axe vertical 3 avec une vitesse comprise entre 0 et 80 tours par minute. L'articulation de la nacelle peut être assurée en roulis sur un axe unique perpendiculaire au plan du dessin (centrifugeuse dite à un degré de liberté) ou sur deux axe orthogonaux (centrifugeuse dite à deux degrés de liberté).

Dans le présent exemple, il s'agit d'une centrifugeuse à deux degrés de liberté dont la nacelle 1 est articulée en roulis sur un axe 4 perpendiculaire au plan du dessin et sur un axe 5 orthogonal à l'axe 4.

Dans ce cas, la nacelle est articulée en tangage sur un anneau 6 qui la ceinture, anneau lui-même articulé en roulis sur l'axe 4 porté par les extrémités de la fourche du bras 2. Les articulations de nacelle permettent d'orienter la pilote par rapport au vecteur accélération qu'il supporte. Sur les machines performantes, les orientations sont commandées par des servo-moteurs spécifiques capables d'agir instantanément.

A rayon et à performances accélérométriques identiques, les machines à deux degrés de liberté portent en bout de bras une masse très supérieure à celle portée par les machines à un degré de liberté. Elles sont en effet alourdies de la masse de l'anneau 6 et de la motorisation supplémentaire de tangage.

La présente invention s'applique plus particulièrement aux centrifugeuses à deux degrés de liberté à performances accélérométriques élevées qui du fait de leur importante inertie appellent les puissances les plus élevées.

Dans la centrifugeuse connue de la Fig.1, un arbre 7 qui porte le bras 2 en structure de treillis tourne sur des roulements à l'intérieur d'un socle porteur 8, par exemple en acier mécano-soudé, solidement ancré sur le génie civil.

Par l'intermédiaire d'un accouplement 9 approprié, l'arbre 7 est entraîné en rotation par l'arbre de sortie à petite vitesse 10a d'un réducteur 10.

L'arbre à grande vitesse 10b du réducteur est entraîné par une motorisation électrique, par exemple des moteurs de type à courant continu permettant aisément des évolutions de vitesse rapides. Dans l'exemple de la Fig.1, il est utilisé deux moteurs 11 en ligne. Cette disposition permet d'obtenir la puissance requise sur le bras 2 de la centrifugeuse avec une moindre inertie des rotors des moteurs et donc une moindre puissance perdue pour l'accélération propre de ceux-ci. Il est à noter que sur les centrifugeuses à très brutales évolutions de vitesse, cette puissance perdue peut représenter jusqu'à quarante pour cent de la puissance appelée.

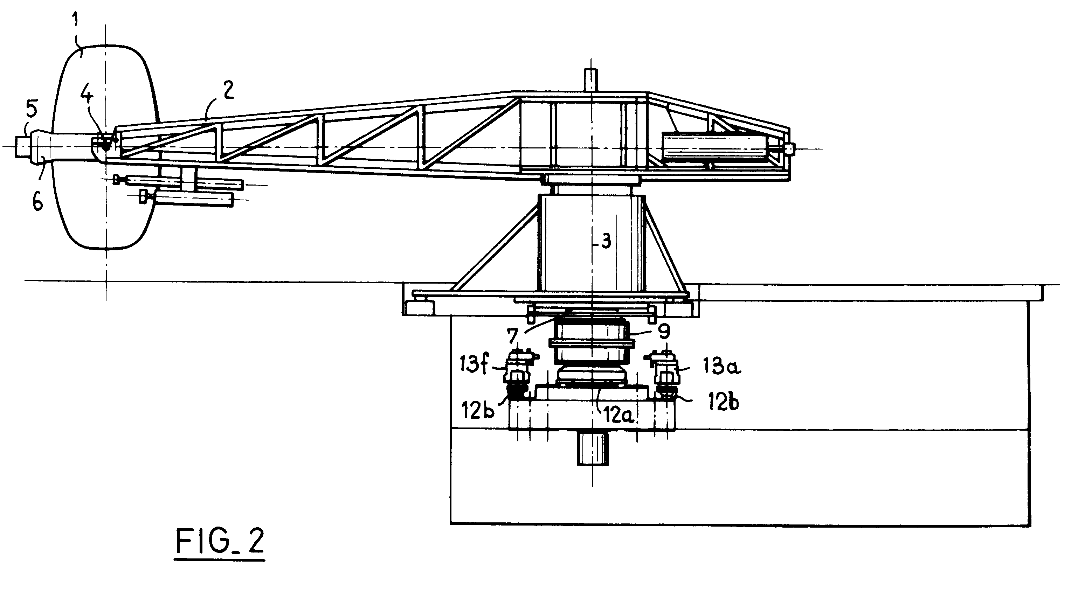

La Fig.2 représente à titre d'exemple non limitatif une centrifugeuse selon l'invention. Les numéros de référence 1 à 9 désignent les mêmes éléments que ceux de la machine représentée à la Fig.1.

Dans cette centrifugeuse, l'arbre 7, par l'intermédiaire de l'accouplement 9, est entraîné par l'arbre à petite vitesse 12a d'un réducteur spécial 12, qui comprend plusieurs arbres à grande vitesse 12b régulièrement répartis à la périphérie du réducteur et accouplés avec des moteurs hydrauliques 13a,...13f.

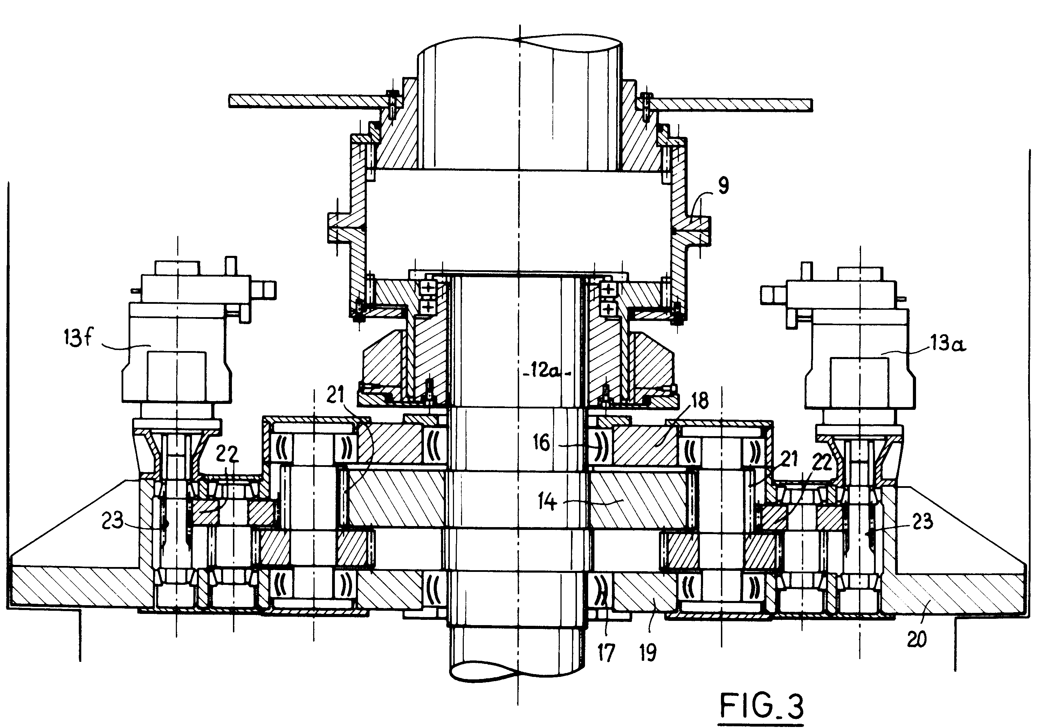

La Fig.3 représente en coupe dans un plan diamétral le réducteur de la centrifugeuse de la Fig.2. Une roue dentée 14 est clavetée sur l'arbre de sortie à petite vitesse 12a tournant sur deux roulements 16 et 17 encagés chacun dans un flasque 18,19 du carter 20 du réducteur. La roue dentée 14 est attaquée simultanément en dix points par des pignons 21 régulièrement répartis à sa périphérie entraînés par dix autres trains d'engrenage 22 à partir de pignons 23 accouplés sur les arbres de sortie de moteurs hydrauliques 13a à 13j (Fig.5a).

Une autre configuration mécanique pourrait consister à utiliser dix moto-réducteurs hydrauliques attaquant la roue dentée 14. La solution représentée est plus légère et de moindre encombrement.

Les moteurs hydrauliques 13a à 13j sont des moteurs à pistons axiaux à cylindrée variable convertibles en pompes comprenant un organe de variation et d'inversion de cylindrée tel qu'un plateau inclinable, par exemple. Ces moteurs peuvent également être des moteurs à barillet inclinable. L'inclinaison du plateau ou du barillet peut s'opérer de part et d'autre de l'axe de l'arbre moteur. L'inclinaison dans un sens procure un moteur qui fournit une puissance mécanique à partir d'une énergie hydraulique. Pour une pression donnée le couple fourni est d'autant plus élevé que l'inclinaison est importante. L'inclinaison dans le sens opposé procure une pompe qui fournit une pression à partir d'une puissance mécanique.

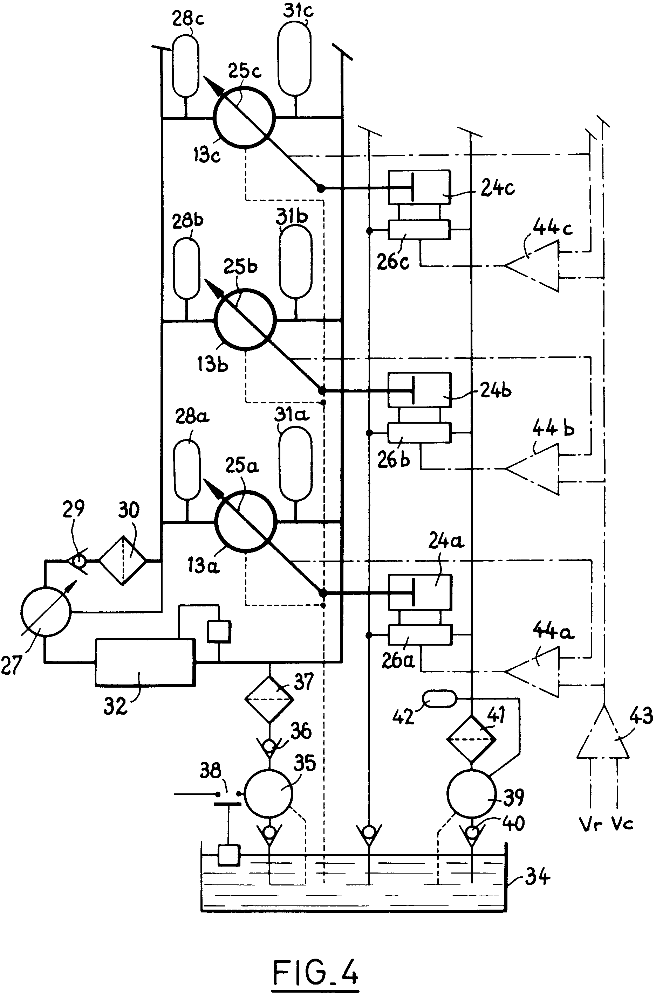

La Fig.4 est le schéma hydraulique simplifié de la centrifugeuse selon l'invention.

13a, 13b, 13c ... représentent les trois premiers moteurs convertibles en pompes de la série de n moteurs, 10 dans l'exemple de la Fig.3, d'entraînement du réducteur 12.

24a, 24b, 24c ... représentent les vérins qui commandent les inclinaisons des plateaux 25a, 25b, 25c, des moteurs. Ces vérins sont commandés, par les servovalves 26a, 26b, 26c.

27 est une pompe à cylindrée variable contrôlée en pression. Son moteur d'entraînement (non représenté) est d'une puissance très inférieure à la puissance instantanée maximale appelée par l'ensemble des moteurs 13a à 13j ... convertibles en pompes (20 à 25%). Son débit est dirigé vers des accumulateurs à haute pression 28a, 28b, 28c associés aux moteurs convertibles en pompes 13a, 13b, 13c à travers un clapet anti-retour 29 et un filtre 30. Elle est alimentée en huile à basse pression par des réservoirs tampons 31a, 31b, 31c... montés à la sortie de chaque moteur, ceci à travers un échangeur thermique 32 de régulation de température T.

Les fuites d'huile des différents moteurs sont reconduites à la bâche 34 par des circuits représentés en traits pointillés. De l'huile est périodiquement réinjectée dans le circuit hydraulique à basse pression par une pompe 35 avec clapet anti-retour 36 et filtre 37, mise en action par un détecteur de niveau 38.

Les vérins 24a, 24b, 24c de commande d'inclinaison des plateaux 25a à 25c des moteurs 13a à 13c sont alimentés à travers leurs servo-valves par une pompe spécifique 39 avec clapet anti-retour 40, filtre 41 et accumulateur anti-pulsations 42.

La partie commande contrôle est représentée en traits mixtes. Une boucle d'asservissement comprenant un premier amplificateur différentiel 43 reçoit une tension Vc de consigne de vitesse à réaliser et une tension Vr de vitesse réalisée sur le bras de la centrifugeuse. Un capteur de vitesse (non représenté) est monté soit sur l'arbre principal 7 de la machine, soit sur l'un des moteurs hydrauliques 13a à 13j convertibles en pompes. L'amplificateur 43 délivre alors une tension de sortie appliquée à des boucles d'asservissement des vérins 24a, 24b, 24c comprenant des amplificateurs différentiels 44a, 44b, 44c. Chacun de ces amplificateurs compare cette tension à la tension d'un capteur d'inclinaison (non représenté) du plateau 25a, 25b, 25c du moteur auquel il est associé et injecte un courant de sortie sur la servovalve 26a, 26b, 26c correspondante pour commander l'évolution adéquaate du vérin 24a, 24b, 24c. Dans l'exemple représenté, chaque moteur est associé à un accumulateur à haute pression 28a à 28c et un réservoir tampon 31a à 31c. Cette disposition permet d'utiliser des capacités standard d'accumulateurs du commerce mais le recours à un seul accumulateur à haute pression et à un seul réservoir tampon pour toute l'installation ne changerait rien en principe. De la même façon, le nombre de moteurs installés peut être très variable, de 1 à n. Dans la pratique, il est préférable d'utiliser un assez grand nombre de moteurs parce que leur puissance se situe alors dans une gamme où le choix parmi les moteurs est le plus large avec des technologies modernes, des fiabilités démontrées et des approvisionnements aisés. Des moteurs de puissance raisonnable (400 kwatts) peuvent en outre offrir de meilleures aptitudes en ce qui concerne la rapidité des évolutions de cylindrée.

Afin d'éviter le développement d'un réducteur spécifique pour chaque application envisagée, différente d'un utilisateur à l'autre, le réducteur est dimensionné pour les plus gros besoins connus à ce jour. A ce titre, il comprend un grand nombre d'arbres d'entrée à grande vitesse (10 par exemple). Les différents trains d'engrenages étant réversibles, cette disposition permet de monter un plus ou moins grand nombre de moteurs jusqu'à obtenir les performances exigées. A titre d'exemple, une centrifugeuse de 6 à 8 mètres à un seul degré de liberté pourrait n'être équipée que de cinq ou six moteurs. Comme indiqué plus haut, cette disposition permet aussi de monter des moteurs hydrauliques dans une gamme commerciale plus étendue bénéficiant des meilleurs perfectionnements.

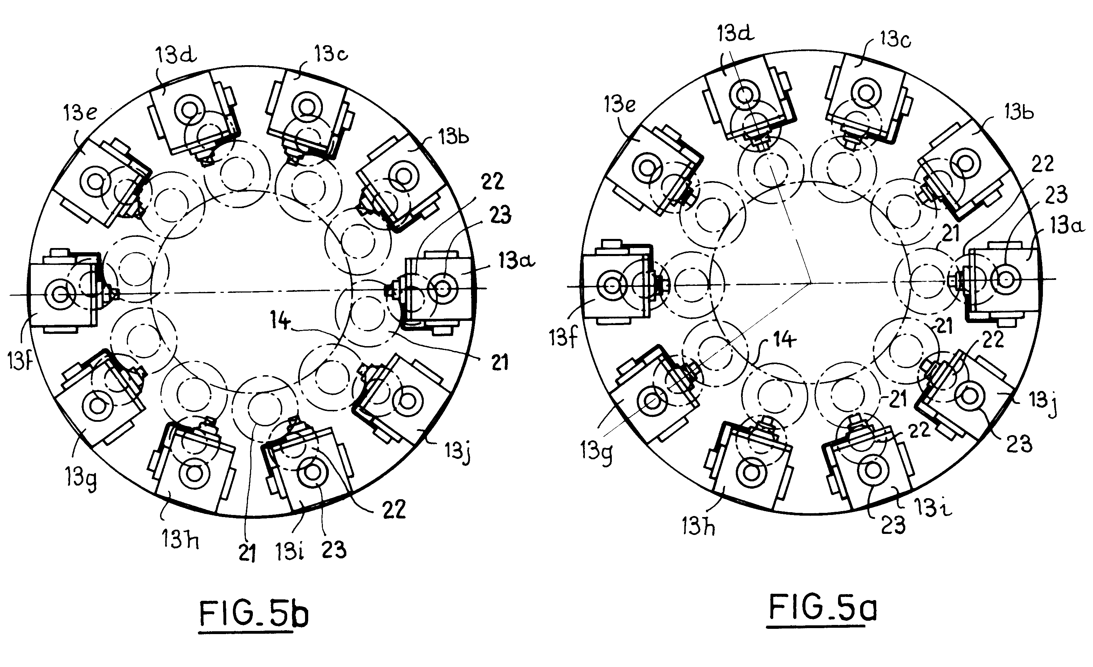

Les Fig. 5a et 5b représentent des vues de dessus des moteurs 13a à 13j convertibles en pompes implantés tout autour de l'arbre principal de deux variantes du réducteur équipant une centri fugeuse suivant l'invention.

Sur la Fig.5a, les trains d'engrenages 22 sont alignés suivant des rayons de la roue dentée 14 coupant les axes des pignons 21.

Sur la Fig.5b, l'organisation des trains d'engrenage permet de réduire l'encombrement du réducteur en décalant les trains d'engrenage 22 par rapport aux rayons du réducteur passant par les axes des pignons 21 en prise avec la couronne 14.

Le réducteur suivant l'invention a un à arbre à petite vitesse 12a de gros diamètre et creux pour permettre le passage des tuyauteries hydrauliques et électriques vers le bras 2 et vers la nacelle 1 au moyen de collecteurs tournants (non représentés).

Le fonctionnement de la centrifugeuse qui vient d'être décrite est le suivant.

La commande du fonctionnement est assurée par le circuit de la Fig.4 qui détermine la position des plateaux inclinés des moteurs hydrauliques convertibles en pompes et par conséquent la puissance qui leur est demandée et leur sens de rotation.

Trois types de fonctionnement sont à considérer:
a) Fonctionnement à faible gradient de vitesse ou à vitesse constante.
   La puissance appelée sur les moteurs convertibles en pompes 13a à 13j, est faible car elle n'est que l'addition d'une puissance faible pour vaincre les couples aérodynamiques toujours faibles (les vitesses restent faibles à cause des limitations de l'anatomie humaine) et d'une puissance faible pour accélérer faiblement. Dans ce cas, la pompe 27 (Fig.4) maintient la pression des accumulateurs à haute pression 28a, 28b, 28c... à sa valeur nominale. C'est donc elle qui fournit toute la puissance appelée aussi longtemps que nécessaire. Il n'y a pas de limitation de durée de fonctionnement à vitesse constante ou à faible gradient d'accélération autre que l'atteinte d'une vitesse supportable par le pilote.
b) Fonctionnement sous brutale augmentation de vitesse.
   Un tel fonctionnement n'est jamais demandé à partir du quasi arrêt de la machine car il ne présente aucun intérêt pour les essais ou les entraînements et nécessite des puissances irréalistes. En pratique, les montées rapides en vitesse ne s'opèrent qu'à partir d'une accélération de 1g en nacelle, soit 10 tours par minute environ préalablement réalisés avec un faible gradient de vitesse. La limitation de vitesse à un niveau supportable pour l'homme restreint la durée d'un tel fonctionnement qui se chiffre en dixièmes de secondes plutôt qu'en secondes.
   Dans ce type de fonctionnement, l'essentiel de l'énergie nécessaire aux moteurs 13a à 13j convertibles en pompes, est alors prélevé sur l'énergie de pression emmagasinée dans les accumulateurs haute pression 28a, 28b, 28c ..., la pompe 27 ne fournissant que l'énergie de sa puissance nominale. Une certaine quantité d'huile à haute pression (par exemple 350 bars) est transférée des accumulateurs à haute pression 28a, 28b, 28c dans les réservoirs tampons 31a, 31b, 31c... Ceux-ci sont avantageusement d'une taille supérieure à celle des accumulateurs à haute pression pour limiter leur variation de pression à quelques dizaines de bars.
c) Fonctionnement en diminution de vitesse avec un gradient plus ou moins important.

Les exigences de contrôle de réduction de vitesse pouvant être aussi sévères que les exigences de contrôle de montée en vitesse et les évolutions pouvant être aussi brutales, il est exclu de réaliser un freinage avec un frein mécanique.

Sur la centrifugeuse selon l'invention, le freinage s'opère en jouant sur la convertibilité des moteurs hydrauliques 13a à 13j en pompes. Ordre électrique est donné aux plateaux 25a, 25b, 25c ... de s'incliner de l'autre côté de la position neutre à cylindrée nulle suivant une consigne programmée dans le temps. Cet ordre est appliqué sous la forme d'une tension de consigne Vc de valeur appropriée à l'entrée de l'amplificateur 43 et transmise aux servo-valves 26a, 26b, 26c par les boucles d'asservissement comprenant les amplificateurs 44a, 44b, 44c. Les servo-valves actionnent à leur tour les vérins 24a, 24b, 24c... qui déplacent les plateaux 25a, 25b, 25c...

Les moteurs se transforment alors en pompes entraînées par la rotation de la nacelle autour de l'arbre 7. Une certaine quantité d'huile est transférée par les moteurs 13a à 13j transformés en pompes, des réservoirs tampons 31a,31b,31c ... dans les accumulateurs à haute pression 28a, 28b, 28c. Cette énergie restituée aux accumulateurs à haute pression à partir de la récupération de l'énergie cinétique de la nacelle en rotation, est disponible pour une suivante et immédiate remontée en vitesse.

En fin de compte, la pompe 27 ne fournit que l'énergie absorbée par les frottements aérodynamiques, hydrauliques et mécaniques. Les énergies nécessaires pour les essais sur centrifugeuses étant faibles à cause de la briéveté de ceux-ci, l'économie n'est pas l'avantage le plus important de la machine. L'intérêt de la centrifugeuse selon l'invention est l'importante réduction du dimensionnement de l'installation électrique amont. Elle présente en outre l'avantage de ne pas renvoyer du courant réactif sur la ligne extérieure pendant les phases de freinage.

## Revendications

1. Centrifugeuse notamment d'entraînement de pilotes d'aéronefs comprenant une nacelle (1) montée avec au moins un degré de liberté de déplacement à une extrémité d'un bras de support (2), lui-même monté à rotation sur un arbre central (7), tournant dans un socle (8), ledit arbre (7) étant relié à un arbre de sortie à petite vitesse (12a) d'un réducteur (12) ayant au moins un arbre à grande vitesse (12b) entraîné par au moins un moteur, caractérisé en ce que ledit au moins un moteur d'entraînement relié à l'arbre à grande vitesse du réducteur est un moteur hydraulique (13a, ... 13j) convertible en pompe pour le freinage de la centrifugeuse, relié à une pompe (27) d'alimentation en fluide, en ce qu'un accumulateur de fluide à haute pression (28a, 28b, 28c...) et un réservoir tampon (31a, 31b, 31c...) sont reliés au circuit d'alimentation du ou de chaque moteur hydraulique de part et d'autre dudit moteur, ledit accumulateur à haute pression étant destiné d'une part à absorber l'excédent d'énergie délivré par la pompe d'alimentation (27) du moteur hydraulique (13a, ... 13j) non consommé par le moteur lorsqu'il fonctionne en régime permanent d'entraînement de la nacelle et l'énergie que le moteur hydraulique converti en pompe délivre lorsqu'il fonctionne en régime de freinage et d'autre part à fournir au moteur hydraulique l'énergie nécessaire à son fonctionnement en régime d'accélération brusque, et en ce que le ou chaque réservoir tampon (31a, 31b, 31c ...) constitue un collecteur du fluide délivré par l'accumulateur à haute pression (28a, 28b, 28c...) lors de l'alimentation du moteur hydraulique (13a, ... 13j) en régime d'accélération brusque et une source de restitution de fluide à l'accumulateur à haute pression (28a,28b,28c ...) lors du fonctionnement du moteur hydraulique (13a, ... 13j) en pompe, en régime de freinage, et en ce qu'elle comporte en outre des moyens (24a ... 24c, 26a ... 26c, 39, 43, 44a, ... 44c) de commande asservie du fonctionnement en moteur ou en pompe du moteur hydraulique convertible en pompe.

2. Centrifugeuse suivant la revendication 1, caractérisée en ce que le réducteur (12) comporte plusieurs arbres à grande vitesse (12b) reliés à autant de moteurs hydrauliques (13a,... 13j), convertibles en pompes, un accumulateur à haute pression (28a, 28b, 28c ...) et un réservoir tampon (31a, 31b, 31c ...) étant associés à chaque moteur hydraulique (13a, ... 13j).

3. Centrifugeuse suivant la revendication 1, caractérisée en ce que le réducteur (12) comporte plusieurs arbres à grande vitesse (12b) reliés à autant de moteurs hydrauliques (13a,... 13j), convertibles en pompes et en ce qu'il est prévu un accumulateur à haute pression et un réservoir tampon communs à tous les moteurs.

4. Centrifugeuse suivant l'une des revendications 1 à 3, caractérisée en ce que les moteurs hydrauliques (13a, ... 13j) convertibles en pompes étant du type à cylindrée variable comprenant un organe (25a, 25b, 25c...) de variation et d'inversion de cylindrée, les moyens de commande asservie desdits moteurs hydrauliques comportent pour chaque moteur un vérin (26a, 26b, 26c ...) d'actionnement de l'organe de variation et d'inversion de cylindrée du moteur correspondant et une boucle d'asservissement (26a, 44a, 26b, 44b, 26c, 44c ...) de chaque vérin (24a, 24b, 24c ...) en fonction de signaux (Vc, Vr) correspondant à une valeur de consigne et une valeur réelle de vitesse du moteur hydraulique commandé par ladite boucle d'asservissement.

5. Centrifugeuse suivant la revendication 4, caractérisée en ce que la boucle d'asservissement (26a, 44a, 26b, 44b, 26c, 44c, ...) de chaque vérin (24a, 24b, 24c..) comprend une servo-valve (26a, 26b, 26c ...) branchée dans le circuit hydraulique du vérin (24a, 24b, 24c) correspondant et connectée à la sortie d'un amplificateur différentiel (44a, 44b, 44c) dont une entrée est connectée à la sortie d'un amplificaeur différentiel (43) commun à toutes les boucles d'asservissement et recevant à ses entrées, les signaux (Vc, Vr) correspondant à la valeur de consigne et à la valeur réelle de vitesse et dont une autre entrée est connectée à un capteur de la position de l'organe (25a, 25b, 25c ...) de variation et d'inversion de cylindrée du moteur hydraulique correspondant.

6. Centrifugeuse suivant l'une des revendications 1 à 5, dont le réducteur (12) comporte une roue dentée (14) calée sur l'arbre à petite vitesse (12a) et attaquée simultanément par des pignons (21) entraînés par des trains d'engrenages (22) à partir de pignons (23) accouplés sur les arbres de sortie des moteurs hydrauliques (13a, ... 13j), caractérisée en ce que les trains d'engrenages (22) sont soit alignés suivant des rayons de la roue dentée (14) coupant les axes des pignons (21) d'attaque de la roue dentée, soit décalés par rapport auxdits rayons.
